# EUROPEAN PATENT APPLICATION

(11) **EP 4 704 449 A1**
(43) Date of publication of application: **04.03.2026**
(21) Application number: 24796356.4
(22) Date of filing: 10.04.2024
(51) Int. Cl.: H04W 4/38, G07C 5/00, G08G 5/00, B64F 5/60, B64D 45/00, G08B 21/00

(54) **SYSTEM AND METHOD FOR MONITORING ULTRALIGHT AIRCRAFT TO DETECT ANOMALIES**

(30) Priority: 26.04.2023 ES 202330332
(71) Applicant: Lujan Lozano, Jaime, 46370 Chiva (Valencia) (ES)
(72) Inventor: Lujan Lozano, Jaime, 46370 Chiva (Valencia) (ES)
(74) Representative: Ungria López, Javier
(86) International application number: PCT/ES2024/070214
(87) International publication number: WO 2024/223965

(57) **Abstract**

The present invention relates to a method and a system for monitoring ultralight aircraft, said system comprising: a set of sensors (1,2) to detect information about the flight envelope and engine operation; a communication bus (3) to channel the readings from all the sensors; a control unit (4) connected to the communication bus to determine the presence of anomalies in the event that any of the received readings exceeds thresholds pre-set by a user for each parameter; and a wireless communication module (5) to transmit a monitoring data block comprising the sensor readings and the detected anomalies to a remote server via a mobile connection network.

## Description

### OBJECT OF THE INVENTION

The present invention relates to the technical field of systems for tracking and monitoring aircraft, and more specifically to systems for controlling in-flight anomalies for ultralight aircraft.

### BACKGROUND OF THE INVENTION

In the field of aviation, there is a sub-sector aimed at the general public that offers the possibility of piloting a low-performance aircraft with low requirements at an affordable price. This sector is called ULM and in Spain (and in most European countries) it is geared towards motorised aerodyne with a maximum take-off weight of 600 kg, no more than two seats, and a stall speed of no more than 65 km/h, according to current legislation.

Ultralight aircraft, or ULM, are classified as airplanes, autogyros and helicopters, and must always fly under VFR (Visual Flight Rules) and be equipped with the following instruments: anemometer (measures the speed of the aircraft with respect to the wind); altimeter (measures altitude or height with respect to a selectable surface or reference point); engine tachometer (measures engine speed); fuel gauge (may be by direct observation of the tank, it is not mandatory to have this instrument); and totaliser hour meter. It is also recommended, although not mandatory, that they be equipped with a compass, radio and GPS. However, in Spain, ultralight aircraft are not subject to specific regulations requiring them to be equipped with complete tracking and monitoring systems, as is required for civil aviation.

Thus, problems that may arise during a flight, accidents or any type of emergency are often difficult to detect and locate in real time or even afterwards. This is often critical to the lives of the occupants and greatly hinders rescue efforts.

Transponders used by aircraft to facilitate their identification in air traffic are known in the state of the art. Control centres receive this information exclusively (it is not publicly accessible), thus managing the trajectories of all aircraft, anticipating any possible anomaly and being able to act preventively. However, although some ultralight aircraft are equipped with transponders of this type for safety reasons (despite not being mandatory for ultralight aviation), it is not a desirable solution insofar as it can saturate control centres, so in practice flights of this type are not usually monitored at any time and there is no way of knowing the position of the aircraft beyond visual observation or radar control.

On the other hand, emergency and location beacons, which are useful in the event of an accident to facilitate identification and positioning for rescue services, are also known in the state of the art. However, given that they are not mandatory and that the cost is high, they are not typical equipment for ultralights, in the same way that black boxes are not equipped to record flight parameters in the event of accidents.

In reality, the only way to obtain information about an ultralight aircraft today is for the pilot to voluntarily decide to share their GPS location via a mobile phone application (WhatsApp or similar) or to use a navigation programme (SkyDemon or Air Navigation Pro, etc.), which means that, in the best case scenario, the information shared about the aircraft will be partial (only position and speed) and only accessible to users of these applications.

Therefore, there is a lack of a solution in the state of the art that allows tracking, both in real time and in deferred mode, of the flight conditions of an ultralight aircraft, thus anticipating any anomaly during the flight and facilitating its monitoring.

### DESCRIPTION OF THE INVENTION

In order to achieve the objectives and avoid the drawbacks mentioned above, the present invention relates, in a first aspect, to a system for monitoring an ultralight aircraft, wherein the system comprises:
- a first set of sensors configured to detect at least a first parameter with information about the flight envelope of the ultralight aircraft, wherein the flight envelope comprises information about at least one of the following parameters: aircraft position, airspeed, ground speed, inclination angles with respect to the 3 axes of the aircraft, accelerations in the 3 axes;
- a second set of sensors configured to detect at least a second parameter with information about engine operation of the ultralight aircraft;
- a communication bus interconnected with the first and second set of sensors, configured to receive readings from both the first and second set of sensors;
- a control unit connected to the communication bus, configured to receive sensor readings and determine the presence of an anomaly in the event that any of the received readings exceeds thresholds pre-set by a user for each parameter; and
- a wireless communication module configured to transmit a monitoring data block comprising the readings from the first and second set of sensors and the anomalies detected by the control unit for each parameter to a remote server via a mobile connection network.

Thus, advantageously, the present invention avoids the saturation of traditional aircraft control centres by deploying a system based on mobile connection networks.

Additionally, the system of the present invention contemplates a receiving part, to be located on the ground, comprising a receiving antenna configured to receive, via the mobile connection network, the monitoring data blocks transmitted by the wireless communication module; and a remote server connected to the receiving antenna, configured to receive the monitoring data blocks and, in response to detected anomalies, generate a warning message.

For the configuration of the system and to be able to access the complete information stored in the server, one of the embodiments of the invention contemplates a user access interface configured to interact with the server from a mobile terminal such as a smartphone or personal computer. Thus, the tracking and monitoring of the aircraft on which the distributed system of the present invention is installed is readily accessible by authorised users.

Optionally, in one embodiment of the invention, the system incorporates an emergency button that can be coupled to the control panel of the aircraft in a readily visible and accessible location, connected directly to the control unit and configured to activate an emergency signal in the server when pressed.

According to one embodiment of the invention, the first set of sensors comprises at least one from the following list of sensors: anemometer sensor, altimeter sensor, accelerometer sensor, inclinometer sensor, GPS sensor, flap position sensor and control position sensor.

According to one embodiment of the invention, the second set of sensors comprises at least one from the following list of sensors: oil temperature sensor, water temperature sensor, fuel pressure probe, fuel flow probe, engine speed sensor, rotor speed sensor, and ManiFold pressure probe.

According to one embodiment of the invention, the communication bus is a CAN bus. Additionally, some sensors may be connected by other means.

According to one embodiment of the invention, the control unit comprises a microcontroller or a microprocessor.

In one particular embodiment of the present invention, the control unit comprises a storage unit configured to store sensor readings and to store configuration parameters (such as alarm thresholds for each parameter) defined by a user. Likewise, data analysis can be performed in real time or after the fact, as the parameters are also stored in the storage unit to allow for their recovery in the event of an accident.

In one particular embodiment of the present invention, the system comprises an enveloping casing that can be coupled to the aircraft and configured to house therein at least the control unit and the wireless communication module. Thus, this advantageously facilitates the installation of the system (to which it is only necessary to connect the sensors via the communication bus) while providing protection for the control unit and communication module.

The system preferably comprises its own battery, which provides complete autonomy in the event of a failure or deficiency in the electrical system of the aircraft, and cannot be unintentionally disconnected by the user during flight.

In a second aspect, the present invention relates to a method for monitoring an ultralight aircraft, wherein the method comprises the following steps:
- detecting, by a first set of sensors, at least a first parameter with information about the flight envelope of the ultralight aircraft;
- detecting, by a second set of sensors, at least a second parameter with information about engine operation of the ultralight aircraft;
- receiving, by a communication bus interconnected with the first and second sets of sensors, readings from both the first and second sets of sensors;
- receiving, by a control unit connected to the communication bus, sensor readings;
- determining, by the control unit, the presence of an anomaly in the event that any of the received readings exceeds thresholds pre-set by a user for each parameter; and
- transmitting, by a wireless communication module, a monitoring data block comprising the readings from the first and second set of sensors and the anomalies detected by the control unit for each parameter to a remote server via a mobile connection network.

Additionally, an initialisation stage control unit is provided, comprising the following steps: comparing each reading received in the control unit with the previous reading received for the same parameter; as long as the result of the comparison registers identical readings, the control unit remains in a standby mode in which the volume of information is lower (readings from only some of the sensors) and with a relatively low frequency; instead, in the event of detecting a variation as a result of the comparison, determining an active operating mode (33); wherein the active operating mode results in: establishing a wireless connection (37), via the mobile connection network, with the remote server (24) to upload the thresholds pre-set by the user for each parameter; and starting the reading (41) of all the sets of sensors (1, 2). Thus, advantageously, automatic differentiation between standby mode and active mode is allowed, which results, among other things, in better use of the system's energy. Alternatively, the initialisation stage of the control unit is also contemplated by manually activating a switch or by starting up the aircraft. In the event of detecting a pressing of the switch, the active operating mode is determined.

According to one embodiment of the invention, once the presence of an anomaly is determined, the control unit increases the reading frequency of the sets of sensors. Thus, advantageously, in the event of an emergency rescue, the search area to be searched is greatly reduced.

Additionally, in one embodiment of the invention, after receiving the monitoring data blocks in the remote server, the step of generating, by the server, a warning message in response to anomalies detected in the monitoring data block is contemplated. Thus, advantageously, this provides high-value real-time monitoring information, allowing authorised users to instantly detect any anomaly outside the pre-set operating thresholds (which are always lower than the safety margins set by the aircraft manufacturer). According to one embodiment of the invention, warning messages are sent by the server in a format and to a recipient pre-set by the user through an interface. This advantageously generates a benefit in terms of both pilot and aircraft safety, as it maximises the margins for anticipating any accident or malfunction.

In one embodiment of the invention, it is contemplated that transmitting, by the wireless communication module, a monitoring data block to a remote server, comprises: starting TCP/IP communication from the wireless communication module; determining, by the wireless communication module, a failure in TCP/IP communication between the wireless communication module and the remote server; and sending, by the wireless communication module, an SMS message comprising the monitoring data block to the remote server. Thus, advantageously, an auxiliary connection is provided that allows service to be maintained in areas with coverage problems.

In one embodiment of the invention, the steps of generating, by the remote server, a map of low coverage areas, based on the received monitoring data blocks; determining that an aircraft is in a low coverage area, based on the received monitoring blocks and the generated map; and generating a warning message for entering a low coverage area, are additionally contemplated. Thus, advantageously, false alarms due to loss of connection are avoided and monitoring of the aircraft can continue when it leaves the low coverage area.

Therefore, in accordance with the above, the present invention relates to an autonomous and automatic system that records flight envelope parameters (mainly position, airspeed, ground speed, inclination angles with respect to the 3 axes of the aircraft, accelerations in the 3 axes) and completes the information with engine operation parameters. The monitoring of all these parameters provides the authorised user with a complete map of what is taking place in the aircraft, both in real time and in deferred mode. The configuration of adaptive thresholds allows the user to limit the aircraft's operating range to the particular conditions of each case, greatly favouring the safety and maintenance of the aircraft. For example, when a novice user is flying, the same alarm thresholds for speed, acceleration or altitude parameters are not set as for an experienced user. Or, for example, on a day with low visibility, the position thresholds will likely be more restrictive than on a sunny day with good visibility, since in the event of a rescue, the same search area with low visibility will take significantly longer.

Among the many technical advantages derived from the present invention, some of them are listed below: aircraft location (the real-time location of the aircraft, or its last known position from which it transmitted, is allowed); monitoring of flight envelope parameters (flight monitors, flight schools, mechanics or any interested party previously defined and authorised in the databases can know in real time the conditions and actions during the flight of the aircraft); monitoring of engine parameters (mechanics and owners can monitor the main engine operation parameters without having to dismantle it or carry out ground tests); configurable alert and warning system (alert types can be configured, such as engine failure, very low ground distance outside an aerodrome, excessive acceleration in dependence of the type of aircraft and the pilot's level of experience, excessive speed, etc.).

### BRIEF DESCRIPTION OF THE FIGURES

To complete the description of the invention and help make its features more readily understandable, according to a preferred exemplary embodiment of the same, a set of drawings is attached wherein, for illustrative and non-limiting purposes, the following figures are represented:
- **Figure 1** depicts a diagram of the elements carried on board the ultralight aircraft according to one embodiment of the invention.
- **Figure 2** depicts a diagram of the receiving elements of the system of the present invention in one of its embodiments.
- **Figure 3** depicts a flow diagram showing the operational functioning of the control unit in one embodiment of the invention.

### DESCRIPTION OF A PREFERRED EMBODIMENT OF THE INVENTION

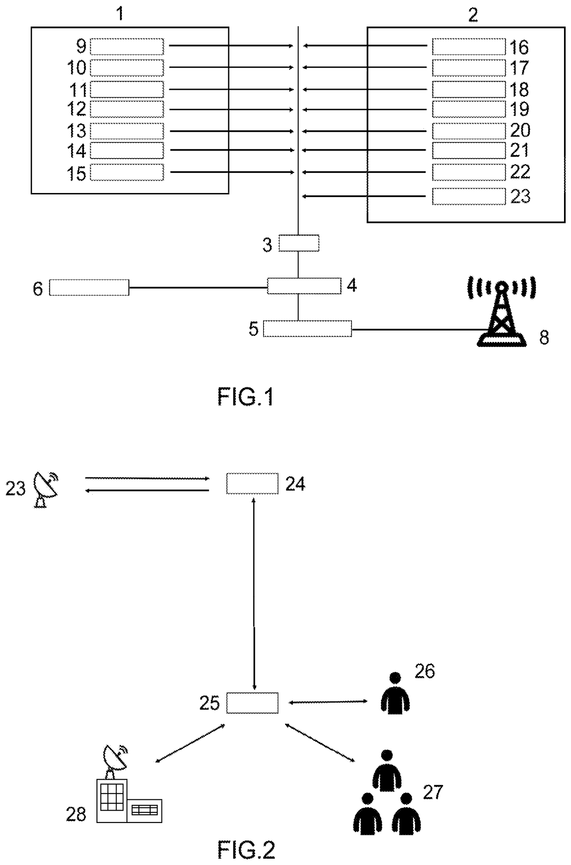

To illustrate the present invention, an exemplary embodiment of the same is detailed below where the indicated reference numbers can be found in **Figures 1-3****.**

**Figure 1** shows the system for monitoring ultralight aircraft according to an embodiment of the present invention, comprising a plurality of electronic sensors **1** (integrated in the same unit or independent components) configured mainly to perform readings of flight envelope parameters of the aircraft (position, airspeed, ground speed, inclination angles with respect to the three axes of the aircraft, accelerations in the three axes). It may also have a plurality of engine sensors **2,** configured to take readings of the main engine operation parameters of the ultralight.

All available readings from the electronic sensors **1** and motor sensors **2** are connected to a communication bus **3,** specifically a CAN (Controller Area Network) bus that allows various devices to communicate with one another through established wiring and protocol.

The location of the sensors on the aircraft depends on the configuration itself of the aircraft. Given that ultralights come in a variety of shapes and configurations, they often require different locations and wiring. However, the specific location of the sensors is not particularly relevant to the present invention, provided that the sensors are interconnected with the communication bus 3.

By way of example, the sensors connected to the communication bus 3 in one embodiment of the invention are as follows:
Anemometer sensor 9: configured to measure aircraft airspeed indirectly, either in the form of direct pressure or by means of a Pitot tube, typically to be shared with the aircraft installation provided by the manufacturer.
Altimeter sensor **10:** configured to measure altitude or height indirectly from barometric pressure
Accelerometer sensor **11:** configured to measure acceleration in each of the 3 axes (x, y, z) of the aircraft.
Inclinometer sensor **12:** configured to measure the inclination in each of the 3 axes (x, y, z) of the aircraft.
GPS (Global Positioning System) sensor **13:** configured to calculate the exact position of the aircraft as well as its altitude and ground speed from satellite signals. The antenna is placed on any surface on the top part of the aircraft, preferably in an area free of obstacles that would prevent reception of the signal from the satellites.
Flap position sensor 14: configured to measure, in the case of light aircraft, the position of the flaps.
Control position sensor **15:** configured to quantify the position of the hand and foot controls in the form of an electrical signal.
Oil temperature sensor **16:** configured to measure the engine oil temperature. Water temperature sensor **17:** configured to measure the engine cooler water temperature.
Fuel pressure sensor **18:** configured to measure the fuel intake pressure.
Fuel flow probe **19:** configured to measure the amount of fuel used by the engine.
Engine speed sensor **20:** configured to measure engine speed
Rotor speed sensor **21:** in the case of an autogyro and helicopter, it measures rotor speed.
ManiFold pressure sensor **22:** configured to measure the suction pressure of the carburettor(s) or injection system.
Outlet gas probes **23:** configured to measure the gas outlet temperature of the cylinder.

The communication bus 3 is connected to a control unit 4. The control unit **4** is an electronic unit operated by a microprocessor or microcontroller, such as an NVIDIA Jetson, Raspberry Pi, Arduino or the like, the function of which is to channel all the data received through the CAN bus and apply rules and filters configured by the user to determine if the aircraft is operating correctly. It periodically collects a sampling of data from all the sensors, being able to store the sampling in a storage unit (memory card or hard drive that stores all data periodically regardless of whether it is transmitted), transmit it, or both. This storage unit also stores the configuration parameters of the control unit **4.**

The control unit **4** is connected to a wireless communication module **5,** which may be 2G, 3G, 4G, 5G, LTE, LTE-M, NB-loT, LoRaWan, or any other mobile communication system. The wireless communication module **5** consists of an electronic unit connected directly to the control unit **4,** which has a physical or virtual SIM card (eSim), through which it establishes a connection to a server via any of the available mobile telephony protocols (LTE, GPRS, HSPA, 5G, etc.) or transmits via Narrow Band loT (NB-loT) or LPWan (if they are available). The wireless communication module 5 has a transmitting antenna **8** preferably located on the underside of the aircraft (belly) in an area or section of the aircraft that is protected from direct impact.

The system of the present invention has an emergency button **6** with safety switch (which cannot be accidentally activated) connected directly to the control unit **4,** which is arranged on the control panel of the aircraft, readily visible and accessible, configured to activate an emergency signal in the server in the event of being pressed.

Externally, the system has a casing 7, such as a box made of aluminium or other material with similar or superior resistance to fire, impacts of a certain force and water, which houses the control unit **4** and the wireless communication module **5.** Externally, the casing is brightly coloured or has a particularly recognisable design to make it easier to locate visually in the event of an accident. The particularities in the configuration of some aircraft may make it necessary to provide a second casing, in the form of a box, to insert part of the sensors, for example the inclinometer and accelerometer sensors.

To power the system of the present invention, an auxiliary battery is provided to ensure its autonomous operation. The auxiliary battery is connected to the aircraft's main electrical system for charging, but regardless of whether the aircraft's electrical system is turned on or off, the system of the invention will function normally as long as the auxiliary battery maintains its charge. Moreover, the monitoring system of the present invention has two fuses: a first fuse that automatically cuts the connection to the main system in the event of excessive battery consumption; and a second fuse that cuts the power supply to all devices in the event of an overload thereof. The auxiliary battery is only completely disconnected by removing this second protection fuse.

**Figure 2** shows a part of the system for monitoring ultralight aircraft of the present invention, specifically the receiving elements to be located on the ground, such as a receiving antenna **23** and a server **24.** The present invention therefore relates to a system distributed between transmitter (part of the system on board the aircraft) and receiver (part of the system on the ground).

The receiver comprises a computer or set of computers (physical or in the cloud) configured to receive messages from each aircraft, store them and process them in its databases. Its functionalities include the following: storage of information transmitted by aircraft; analysis of the aircraft's situation and status; monitoring the flight envelope of each aircraft; monitoring of engine performance; locating of the aircraft (last information received); transmission of warnings (to configured users: flight manager, people nearby, etc.); transmission of alerts (to configured users: flight manager, people nearby, etc.); transmission of reports (flight, flight envelope, engine performance, schedules, etc.).

A software application **25** developed as an interface for mobile phones, electronic tablets and PCs is available for consultation and management of the information. Thus, through said application, the owner **26** of the aircraft can configure, for example, which persons **27** or entities **28** are allowed access from the server, either in real time or in deferred mode, to the data authorised for the owner's aircraft.

As for the operational functioning of the present invention, it must first be taken into consideration that all the thresholds defined for the detection of anomalies by users, alarms and warnings are subject to the operating range established by the parameters specified by the manufacturer of each aircraft, which ensure the safety margin of the apparatus. A sample of some of them (non-exhaustive list) are the following: VNE (never exceed or maximum speed) expressed in Knt or Km/h; VF: maximum speed at which flaps must be deployed; Vcx: cruising speed; Vc: effective climb speed; Vs: stall speed or minimum flying speed in landing configuration; maximum acceleration that the aircraft can withstand: negative g-forces, positive g-forces; engine Rpm: speed range in yellow (warning), green (normal) and red (danger) of the engine speed; RPM rotor (autogyro and helicopter only): speed range in yellow (warning), green (normal) and red (danger) for rotor speed; engine temperatures (oil, coolant, exhaust fumes).

Thus, when installing the system in the aircraft, all parameters defined by the aircraft manufacturer must be added as default parameters for the control unit warnings. Additionally, the owner of the can define warnings and alarms about certain limitations, but always within the range allowed by the manufacturer, such as: height above ground; maximum altitude; maximum and minimum speeds; maximum authorised accelerations; and any other warning or alert that can be measured by the sensors in order to ensure the safety of the aircraft.

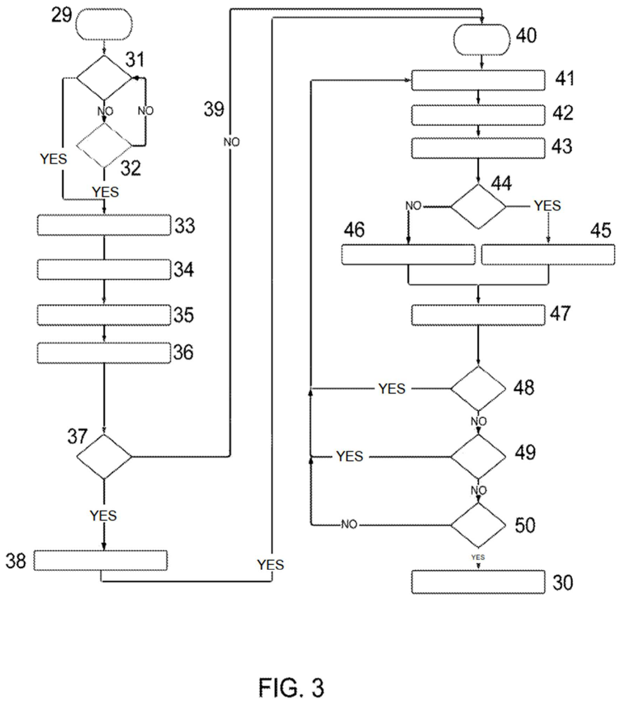

**Figure 3** shows a detail of the operational functioning of the present invention, where the operating method starts **29** in a standby mode **30.** A switch **31** is provided to manually activate an active mode **33** in which the control unit 4 takes readings from all sensors according to an assigned frequency. However, in the absence of pressing the switch 31, the control unit 4 remains in the standby mode 30, where it only takes readings from some sensors every certain pre-set period of time, such as readings from the accelerometer 11 and the inclinometer 12 every fifteen minutes. Each reading is compared with the previous reading and, if the parameters have not changed from the previous reading, a low consumption mode is adopted. In contrast, if a variation 32 of the parameters is detected with respect to the previous reading, a message with the reading of the parameter is sent to the server 24 and it automatically switches to active mode 33.

Once in active mode 33, the control unit 4 is initialised 34 and the set default parameters are loaded 35. For example, in one embodiment of the invention, the default parameters correspond to the latest flight envelope configuration parameters received by the system, pending the arrival of new ones, for example, due to a change of pilot (although the engine parameters remain the same for all pilots). After performing an initial check 36 of the devices connected to the communication bus 3 (where the correct operation of the bus and sensors is verified, confirming that they are connected and the values exchanged are correct), the control unit 4 establishes a wireless connection 37 with the server and thus verifies 38 that the warning parameters configured within the control unit are correct, updating to new parameters if applicable.

Even where it is not possible to establish communication 39 before the start of the flight, the initial parameters and the last configuration parameters from the previous flight remain.

At the start of sampling 40, the control unit periodically (several times per minute) reads 41 all sensors through the CAN bus to verify that they are within the defined parameters. Periodically (for example, every 60 seconds) the control unit 4 sends an information block containing the identification of the aircraft, its position, and the values read through the CAN bus with respect to its flight envelope and engine operating speed, through the wireless communication module 5.

At the same time, each data reading by the control unit 4 is stored 42 in a file on a logical device contained in the same casing 7 that houses the control unit.

The stored data readings are concurrently processed 43 to detect 44 anomalies. As long as the control unit 4 does not detect any anomaly, the readings and sending of data follow the pre-set times, maintaining 46 or reducing the cycle frequency. On the contrary, in the event that the control unit 4 detects that any of the supervised parameters has an anomalous value outside the defined operating parameters or detects that the pilot has activated the help button 6, it increases the frequency of reading and sending data 45. The latter is in anticipation of an emergency rescue, as an aircraft at 60 mph travels 1 mile (1,609 metres) in one minute. If the frequency of sending data is increased to 10 times per minute, the aircraft travels only 0.1 miles (160.9 metres) between each time a signal is sent, which allows for a more precise determination of a possible landing or impact point, in addition to the position and altitude data. Finally, with the cycle frequency that determines whether or not anomalies are detected, data is transmitted 47 from the wireless communication module 5, comprising the information block containing the identification of the aircraft, position, values read through the CAN bus and possible warnings/alerts.

The control unit 4 will remain in active mode, operating in a loop as long as it detects changes in value in successive sensor readings. Eventually, the control unit 4 will detect that there is no variation 48 in values between successive readings, then confirm that no active anomaly 49 remain (sensor readings outside the thresholds configured by the user) and then proceed to turn it off 50, again being in standby mode 30.

On the server 24 side, the received data is subsequently stored and processed in search of anomalies and alerts. In one embodiment of the invention, the server 24 performs a redundant check of the received data to confirm that the values remain within the same operating parameters defined for the control unit 4. Thus, it is advantageously able to detect, for example, whether a single failure, a persistent failure, a reading error or another type of statistical analysis has occurred, resulting in a more robust system. Moreover, in the event that any of the signals sent from the control unit **4** of the aircraft incorporates a warning or alert, the server **24** will immediately send a warning message to the persons included in the server (through the application itself, SMS, e-mail, etc.), with a text informing them of the incident, its seriousness and the place where it has occurred.

In the event that the geographical location of the aircraft does not allow the establishment of a complete TCP/IP connection between the wireless communication module **5** of the monitoring system and the remote server, the transmission method of the wireless communication module **5** automatically changes to an SMS message protocol, as this method requires lower signal quality and fewer technical requirements to operate. In the event of an occasional loss of radio coverage, the system stores the messages in the storage unit of the control unit **4** to later send them when coverage improves and normal communication is possible.

The information received in the server from the aircraft (position provided by the GPS sensor, altitude provided by the altimeter sensor or by the GPS sensor and quality of the signals transmitted by the wireless communication module), allow the server to generate a map of low coverage areas. The map of low coverage areas allows the server, in dependence of position, course and speed, to determine a maximum time during which the aircraft can remain without communication and not transmit a signal loss warning, but a warning for entering a predetermined low coverage area. In this way, false alarms due to loss of connection are advantageously prevented.

Moreover, the server can generate another type of alarms, such as warnings for unjustified loss of connection (from the map of low coverage), warnings for exceeding endurance of the aircraft (with or without communication), and others that may be of interest to the individual user.

The system of the present invention allows the user to create flight plans with origin, destination and intermediate reference points. In that case, the control unit **4** of the monitoring system, according to said flight plan configured by the user, transmits a warning in the event that it determines a failure to comply with the flight plan, for example, a deviation from the course, an unplanned stop or a failure to comply with the arrival time. The configuration of a flight plan by the user allows the notification of basic information (identification, position, speed, course and altitude) of the aircraft and departure and arrival forecasts to the flight managers of the respective aerodromes through a computer application specifically developed to exchange information with the remote server to which the wireless communication module of the system for monitoring ultralight aircraft of the present invention is connected.

The elements of the present invention which are described as *"connected"* are not to be understood exclusively as *"connected directly",* but may be connected directly or there may be other elements connected between them. Therefore, where elements are referred to as connected, it can be understood that the elements are connected, but this can be directly or through other elements.

The present invention is not limited to the embodiments described herein. Other configurations can be carried out by those skilled in the art in view of the present description. Accordingly, the scope of the invention is defined by the following claims.

## Claims

1. A system for monitoring an ultralight aircraft, **characterised in that** it comprises:
- a first set of sensors (1) configured to detect at least a first parameter with information about the flight envelope of the ultralight aircraft;
- a second set of sensors (2) configured to detect at least a second parameter with information about engine operation of the ultralight aircraft;
- a communication bus (3) configured to receive readings from both the first (1) and second (2) set of sensors;
- a control unit (4) connected to the communication bus (3), configured to receive readings received from the communication bus and determine the presence of an anomaly in the event that any of the received readings exceeds thresholds pre-set by a user for each parameter; and
- a wireless communication module (5) configured to transmit a monitoring data block comprising the readings from the first and second set of sensors and the anomalies determined by the control unit (4) for each parameter to a remote server via a mobile connection network.

2. The system according to claim 1, further comprising:
- a receiving antenna (23) configured to receive, via the mobile connection network, the monitoring data block transmitted by the wireless communication module (5); and
- a remote server (24) connected to the receiving antenna, configured to receive the monitoring data block and, in response to determined anomalies, generate a warning message.

3. The system according to claim 2, further comprising:
- a user access interface (25) configured to interact with the server (24) from a mobile terminal such as a smartphone or personal computer.

4. The system according to any of the preceding claims, further comprising:
- an emergency button (6) connected directly to the control unit (4) and configured to activate an emergency signal in the server if pressed, where the button can be coupled to a control panel in the aircraft.

5. The system according to any of the preceding claims, wherein the first set of sensors (1) comprises at least one from the following list of sensors: anemometer sensor (9), altimeter sensor (10), accelerometer sensor (11), inclinometer sensor (12), GPS sensor (13), flap position sensor (14) and control position sensor (15).

6. The system according to any of the preceding claims, wherein the second set of sensors (2) comprises at least one from the following list of sensors: oil temperature sensor (16), water temperature sensor (17), fuel pressure probe (18), fuel flow probe (19), engine speed sensor (20), rotor speed sensor (21), ManiFold pressure probe (22) and exhaust gas temperature probe (23).

7. The system according to any of the preceding claims, wherein the control unit (4) further comprises:
- a storage unit configured to store sensor readings and to store configuration parameters defined by a user.

8. The system according to any of the preceding claims, wherein the communication bus (3) is a CAN type communication bus.

9. The system according to any of the preceding claims, further comprising:
- an enveloping casing that can be coupled to the aircraft and configured to house therein at least the control unit (4) and the wireless communication module (5).

10. A method for monitoring an ultralight aircraft, **characterised in that** it comprises the following steps:
- detecting, by a first set of sensors (1), at least a first parameter with information about the flight envelope of the ultralight aircraft;
- detecting, by a second set of sensors (2), at least a second parameter with information about engine operation of the ultralight aircraft;
- receiving, by a communication bus (3), readings from both the first (1) and second (2) set of sensors;
- receiving, by a control unit (4), the readings from the communication bus;
- determining (44), by the control unit, the presence of an anomaly in the event that any of the received readings exceeds thresholds pre-set by a user for each parameter; and
- transmitting (47), by a wireless communication module (5), a monitoring data block comprising the readings from the first and second set of sensors and the anomalies detected by the control unit (4) for each parameter to a remote server (24) via a mobile connection network.

11. The method according to claim 10, further comprising an initialisation stage (29) of the control unit (4) comprising the following steps:
- comparing (32) each reading received in the control unit with the previous reading received for the same parameter;
- as long as the result of the comparison registers identical readings, the control unit remains in a standby mode;
- in the event of detecting a variation as a result of the comparison, determining an active operating mode (33); wherein the active operating mode results in:
- establishing a wireless connection (37), via the mobile connection network, with the remote server (24) to upload the thresholds pre-set by the user for each parameter; and
- starting the reading (41) of the sets of sensors (1, 2).

12. The method according to claim 10, further comprising an initialisation stage (29) of the control unit (4) comprising the following steps:
- activating, by the user, an active operating mode switch;
- in the event of detecting a pressing of the switch, determining an active operating mode (33), wherein the active operating mode results in:
- establishing a wireless connection (37), via the mobile connection network, with the remote server (24) to upload the thresholds pre-set by the user for each parameter;
- starting the reading (41) of the sets of sensors (1,2).

13. The method according to any of claims 10-12, wherein determining (44) by the control unit (4) the presence of an anomaly further comprises:
- increasing (45) the reading frequency of the sets of sensors.

14. The method according to any of claims 10-13, wherein receiving the monitoring data blocks in the remote server further comprises:
- generating, by the server, a warning message in response to anomalies detected in the monitoring data block.

15. The method according to claim 14, further comprising:
- sending, by the server, the generated warning message in a format and to a recipient previously set by the user through a configuration interface.

16. The method according to any of claims 10-15, wherein transmitting (5), by the wireless communication module (5), a monitoring data block to a remote server comprises:
- starting TCP/IP communication from the wireless communication module;
- determining, by the wireless communication module, a failure in TCP/IP communication between the wireless communication module and the remote server;
- sending, by the wireless communication module, an SMS message comprising the monitoring data block to the remote server.

17. The method according to any of claims 10-16, further comprising:
- generating, by the remote server, a map of low coverage areas, based on the received monitoring data blocks;
- determining that an aircraft is in a low coverage area, based on the received monitoring blocks and the generated map; and
- generating a warning message for entering a low coverage area.
